# EUROPÄISCHE PATENTSCHRIFT

(11) **EP 0 634 045 B1**
(45) Veröffentlichungstag und Bekanntmachung des Hinweises auf die Patenterteilung: **04.12.1996**
(21) Anmeldenummer: 93908875.3
(22) Anmeldetag: 01.04.1993
(51) Int. Cl.: G21C 13/10, G21C 13/00

(54) **GASDICHTE SCHUTZWAND**
GASTIGHT WALL
PAROI DE PROTECTION ETANCHE AUX GAZ

(30) Priorität: 03.04.1992 DE 4211283; 13.04.1992 DE 4212225
(43) Veröffentlichungstag der Anmeldung: 18.01.1995
(73) Patentinhaber: SIEMENS AKTIENGESELLSCHAFT, 80333 München (DE); LIERSCH, Günter, D-82319 Starnberg (DE); PETER, Udo, D-45219 Essen (DE)
(72) Erfinder: LIERSCH, Günter, D-8130 Starnberg (DE); PETER, Udo, D-4300 Essen 18 (DE); DANISCH, Rüdiger, D-8520 Erlangen (DE); HÜMMER, Manfred, D-8552 Höchstadt (DE)
(74) Vertreter: Fuchs, Franz-Josef, Dr.-Ing.
(86) Internationale Anmeldenummer: EP9300797
(87) Internationale Veröffentlichungsnummer: WO9320561

(56) Entgegenhaltungen:
- DE-A- 2 554 576
- DE-A- 3 137 999
- DE-A- 3 321 255
- FR-A- 2 183 470
- US-A- 3 497 421
- US-A- 4 279 701

## Beschreibung

Die Erfindung betrifft eine Wand, insbesondere eine Wand eines Containments für eine kerntechnische Anlage, eines Beckens oder einer Kaverne.

Eine solche Wand kann auch Teil eines anderen Bauwerkes sein, das hohen sicherheitstechnischen Anforderungen entsprechen muß.

Aus der DE-A-25 54 576 ist eine Wand eines Gebäudes bekannt, bei der einer inneren Konstruktion eine äußere Konstruktion zugeordnet ist. Beide Konstruktionen sind jeweils selbsttragend gegründet. Sie können gegeneinander abgestützt sein. Der freibleibende Zwischenraum zwischen den beiden Konstruktionen kann mit einem Werkstoff verfüllt sein, der Dichtungseigenschaften hat.

Eine solche Wand muß stets komplett konstruiert und aufgebaut werden, da die innere Konstruktion die Inneneinbauten tragen soll.

Der Erfindung lag die Aufgabe zugrunde, eine Wand anzugeben, bei der eine gasdichte Abdichtung schnell und zuverlässig und mit einfachen Mitteln erfolgen kann. Die zur Abdichtung zu verwendenden Mittel sollen darüber hinaus gegen mechanische oder andere Einwirkungen zuverlässig geschützt sein. Insbesondere soll eine zuverlässige Abdichtung der Wand selbst dann, wenn Kräfte einwirken, gewährleistet sein.

Die Aufgabe wird gemäß der Erfindung gelöst, durch eine Tragwand, ein Dichtungselement, das mindestens eine Oberfläche der Tragwand überdeckend angeordnet ist, eine Schutzwand, die das Dichtungselement überdeckend angeordnet ist, und eine kraftschlüssige Verbindung der Schutzwand mit der Tragwand.

Das Dichtungselement dichtet die Tragwand gasdicht und/oder flüssigkeitsdicht ab. Durch die Schutzwand wird das Dichtungselement vor mechanischen Einwirkungen geschützt. Solche Einwirkungen können auftreffende Teile, Strahlung, chemische Einwirkungen oder hohe Temperatur sein. Die Schutzwand benötigt kein eigenes Fundament, da sie allein an der Tragwand befestigt ist. Da diese Verbindung kraftschlüssig ist, können keine Relativ-Verschiebungen der Schutzwand senkrecht zur Tragwand vorkommen. Das Dichtungselement ist somit zwischen Tragwand und Schutzwand eingespannt. Ablösungen und Auflösungen des Dichtungselements sind ausgeschlossen.

Da die Schutzwand von der Tragwand gehalten wird und damit auf dem gleichen Fundament ruht, können auch Einwirkungen von außen die Schutzwand nicht relativ zur Tragwand verschieben. Einwirkungen von außen können das Dichtungselement nicht beschädigen.

Falls die Wand Teil eines Gebäudes ist, können das Dichtungselement und die Schutzwand wahlweise von innen oder von außen auf die Tragwand aufgebracht sein. Insbesondere bei der Anordnung eines Dichtungselementes und einer Schutzwand auf der Innenoberfläche der Containmentwand einer kerntechnischen Anlage wird das Dichtungselement durch die Schutzwand vor Einwirkungen aus dem Inneren des Containments zuverlässig geschützt.

Beispielsweise ist die Tragwand vorgespannt und dadurch mit der Schutzwand kraftschlüssig verbunden. Die Tragwand darf dazu erst vorgespannt werden, wenn das Dichtungselement und die Schutzwand aufgebaut sind. Durch das Vorspannen der Tragwand wird eine kraftschlüssige Verbindung zwischen der Tragwand und der Schutzwand erzielt.

Wahlweise kann auch die Schutzwand vorgespannt sein.

Nach einem anderen Beispiel ist die Schutzwand durch Anker, die das Dichtungselement durchdringen, mit der Tragwand kraftschlüssig verbunden und das Dichtungselement ist mit den Ankern gas- und/oder flüssigkeitsdicht verbunden. Die Anker durchdringen zwar das Dichtungselement, es ist jedoch sichergestellt, daß an den Durchdringungspunkten keine Undichtigkeiten vorhanden sind. Ein gasdichter Abschluß ist dadurch stets gewährleistet.

Beispielsweise können das Dichtungselement mit der Tragwand und/oder die Schutzwand mit dem Dichtungselement durch mindestens eine Klebeverbindung kraftschlüssig verbunden sein. Wenn beide genannten Verbindungen Klebeverbindungen sind, wird eine schnell aufzubauende, kraftschlüssige Verbindung zwischen Tragwand und Schutzwand erzielt.

Beispielsweise besteht die Schutzwand aus mehreren Teilstücken. Eine soche Schutzwand kann schnell aufgebaut werden. Selbst bei einer Nachrüstung einer Wand, insbesondere eines Gebäudes, ist eine solche Schutzwand schnell zu installieren.

Beispielsweise ist jedes Teilstück durch Anker oder durch eine Klebeverbindung mit der Tragwand kraftschlüssig verbunden. Die Schutzwand kann dann stückweise aufgebaut werden. Wenn die Teilstücke der Schutzwand auf das Dichtungselement aufgeklebt sind, kommt man ganz oder teilweise ohne Anker oder andere Befestigungsmittel oder -konstruktionen aus.

Nach einem anderen Beispiel können die Teilstücke durch Spannelemente miteinander in Verbindung stehen, wodurch die Teilstücke mit der Tragwand kraftschlüssig verbunden sind. Eine solche Anordnung ist besonders gut an runder Wänden einsetzbar.

Nach einem anderen Beispiel ist auf der Schutzwand ein Tragwerk angeordnet, durch das die Teilstücke der Schutzwand kraftschlüssig an die Tragwand angedrückt werden.

Beispielsweise sind die Teilstücke so angeordnet, daß Fugen zwischen ihnen frei bleiben. Dadurch sind Wärmedehnungen der Teilstücke möglich. Die Fugen können vergossen sein. Die Teilstücke können als Fertigteile vorgefertigt, getrennt antransportiert und dann für die Wand eingesetzt werden. Ein Dichtungselement mit Stützwand kann auf diese Weise vorteilhafterweise schnell, zuverlässig und kostengünstig aufgebaut werden. Selbst eine Nachrüstung eines fertiggestellten Gebäudes ist schnell und zuverlässig möglich.

Beispielsweise ist oder enthält das Dichtungselement eine Schicht, die aus einem Material besteht, das elastisch und/oder plastisch ist, und/oder dessen Viskosität bei Erwärmung steigt. Elastisches oder plastisches Material überbrückt Risse oder Porösitäten. Eine Schicht aus einem Material, dessen Viskosität bei Erwärmung steigt, wird, falls die Wand einen heißen Raum umgibt, bei zunehmender Erwärmung relativ weich und füllt dann alle Spalten im Raum zwischen der Tragwand und der Schutzwand und auch Ungänzen in den Wänden aus. Die Dichteigenschaften der Schicht werden dadurch weiter verbessert.

Das Dichtungselement ist oder enthält beispielsweise eine beständige Schicht, insbesondere aus einem glasfaser- oder kohlefaser- oder metallfaserverstärktem Kunststofflaminat. Eine solche Schicht hält den Einflüssen von Strahlung und hoher Temperatur stand. Sie ist auch korrosionsbeständig. Eine solche Schicht kann auf der Oberfläche der Wand aufgeklebt werden. Die Schicht wird dann durch die Schutzwand, die in der Regel aus Beton besteht, gegen Einwirkungen geschützt. Die Schutzwand braucht nicht gasdicht zu sein. Es ist jedoch notwendig, daß Durchdringungen von Ankern durch die Folie gasdicht sind. Dazu kann die Folie mit den Ankern verklebt sein.

Beispielsweise ist die Schutzwand temperaturbeständig und/oder strahlungsbeständig und/oder schlagsicher und/oder schlagdämpfend und/oder korrosionsbeständig. Dadurch ist ein optimaler Schutz des Dichtungselementes gegeben. Darüber hinaus wird aber auch die Tragwand durch eine derartige Schutzwand geschützt. Die Tragwand trägt in der Regel ein Gebäude und nimmt Kräfte auf. Sie muß daher deutlich dicker sein als die Schutzwand. Wegen der Eigenschaften der Schutzwand braucht die Tragwand nicht aus einem aufwendigen und teueren strahlungs-, hitze- und korrosionsbeständigen Material zu bestehen. Alle Einwirkungen werden von der Schutzwand aufgenommen.

Beispielsweise sind durch Anker zunächst Halterungen mit der Tragwand kraftschlüssig verbunden. Diese Halterungen halten die Teilstücke der Schutzwand. Mit solchen Halterungen ist ein einfaches und schnelles Montieren der Teilstücke der Schutzwand möglich.

Beispielsweise sind die Halterungen doppel-T-förmig geformt. Einer der beiden parallelen Schenkel einer solchen Halterung ist durch mindestens einen Anker mit der Tragwand kraftschlüssig verbunden. In der Regel sind jedoch mehrere Anker erforderlich. Die doppel T-förmige Halterung nimmt zwei benachbarte Teilstücke der Schutzwand auf.

Mit derartigen Halterungen ist eine Schutzwand schnell und zuverlässig zu montieren. Das ist insbesondere dann wichtig, wenn Wände eines Gebäudes nachträglich mit einer solchen Schutzwand versehen werden sollen.

Beispielsweise hat das Dichtungselement Hohlräume, die auf Leckage überwachbar sind. Dazu sind unterschiedliche als solche bekannte Verfahren einsetzbar. Beispielsweise kann mit einem Druckmesser der Druck im Hohlraum überwacht wer-den oder es kann mit einem Sensor überwacht werden, ob in den Hohlräumen ein üblicherweise nur außerhalb des Dichtungselementes vorhandener Stoff enthalten ist. In beiden Fällen kann erkannt werden, ob das Dichtungselement selbst beschädigt ist.

Die Wand gemäß der Erfindung ist nicht nur gasdicht, das Dichtungselement ist darüber hinaus durch die Schutzwand vor Einwirkungen geschützt. Das Dichtungselement und die Schutzwand sind durch die Tragwand gehalten, so daß Verschiebungen der Tragwand und der Schutzwand gegeneinander und dadurch Belastungen des Dichtungselementes nicht erfolgen. Insbesondere können das Dichtungselement und die Schutzwand schnell und zuverlässig auch zur Nachrüstung eines sonst fertiggestellten Gebäudes montiert werden. Dazu trägt bei, daß die Schutzwand aus einzelnen Teilstücken, die als Fertigteile vorgefertigt sein können, bestehen kann.

Falls die Wand ein Gebäude begrenzt, und das Dichtungselement und die Schutzwand auf der Innenoberfläche des Gebäudes angeordnet sind, können Einwirkungen aus dem Inneren des Gebäudes die Dichtheit des Gebäudes nicht beeinträchtigen, da die Schutzwand das Dichtungselement schützt. Die Wand gemäß der Erfindung ist besonders vorteilhaft für ein Containment eines Kernkraftwerks einsetzbar. Sie kann jedoch auch für andere Gebäude Verwendung finden. Ein solches Gebäude kann auch ein Lagerbecken oder eine Kaverne sein.

Eine Wand gemäß der Erfindung wird anhand der Zeichnung näher erläutert:

Figur 1 zeigt ein Gebäude mit einer Tragwand, einem Dichtungselement und einer Schutzwand,

Figur 2 zeigt einen Teil der Tragwand mit Dichtungselement und Schutzwand.

Figur 3 zeigt eine andere Ausführungsform einer Tragwand mit Dichtungselement und Schutzwand.

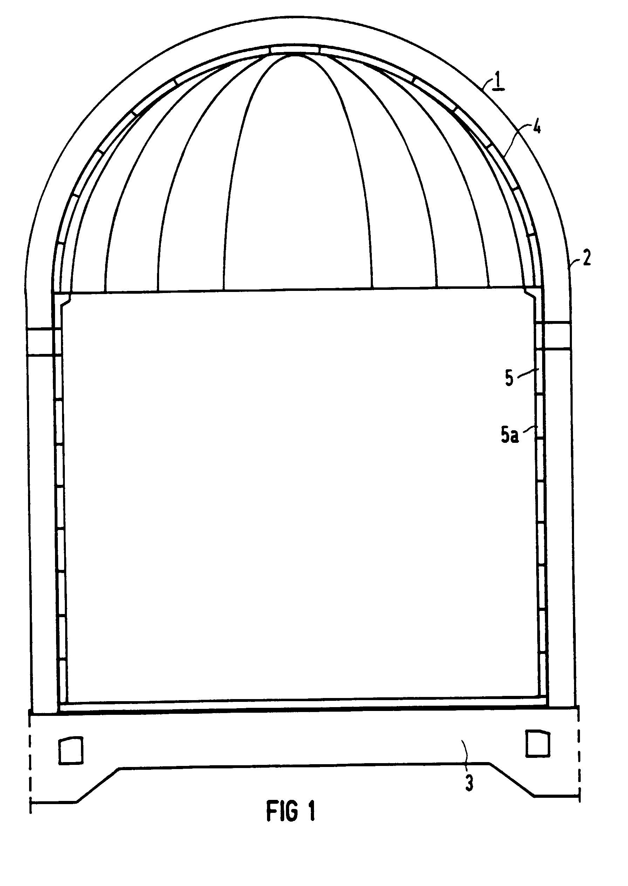

Ein Gebäude nach Figur 1 weist eine Wand 1 auf, die auf einer Fundamentplatte 3 gegründet ist. Die Wand 1 besteht aus einer Tragwand 2, die auf ihrer Innenoberfläche durch ein Dichtungselement 4 überdeckt ist. Dieses Dichtungselement 4 ist auch auf der Fundamentplatte 3 angeordnet, so daß es den gesamten Innenraum des Gebäudes umschließt. Zum Schutz des Dichtungselementes 4, das eine Schicht aus einem Kunststofflaminat sein kann, ist das Dichtungselement 4 von innen überdeckend als Teil der Wand 1 eine Schutzwand 5 angeordnet. Das Dichtungselement 4 kann auf der Tragwand 2 aufgeklebt und die Schutzwand 5 kann auf dem Dichtungselement 4 aufgeklebt sein. Die Schutzwand 5 kann auch durch in Figur 1 nicht dargestellte Anker oder durch Spannglieder mit der Tragwand 2 kraftschlüssig verbunden sein. Dabei ist das Dichtungselement 4 mit den Ankern gasdicht verbunden. Die Schutzwand 5 kann aus mehreren Teilstücken 5a bestehen. Solche Teilstücke 5a können als Betonfertigteile oder Gußfertigteile vorgefertigt werden.

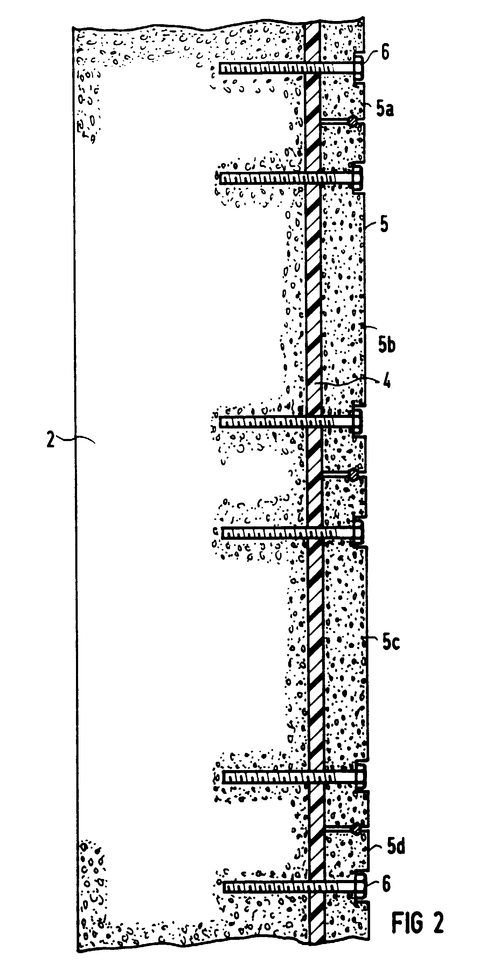

Nach Figur 2 ist auf der Innenoberfläche der Tragwand 2 das Dichtungselement 4 angeordnet. Es kann dort aufgeklebt sein. Zum Schutz des Dichtungselementes 4 dient die Schutzwand 5, die aus einzelnen Teilstücken 5a bis 5d besteht. Jedes einzelne dieser Teilstücke 5a bis 5d ist durch Anker 6 kraftschlüssig mit der Tragwand 2 verbunden. Es kann aber auch auf dem Dichtungselement 4 aufgeklebt sein. Die Anker 6 durchdringen das Dichtungselement 4. An den Durchdringungsstellen ist das Dichtungselement 4 gasdicht mit den Ankern 6 verklebt. Es ist dadurch sichergestellt, daß die Tragwand 2 durch das Dichtungselement 4 gasdicht nach innen abgeschlossen ist. Die Schutzwand 5 braucht nicht gasdicht zu sein. Sie schützt das Dichtungselement 4 vor mechanischen Einwirkungen, z.B. aus dem Innenraum des Gebäudes. Ebenso schützt die Schutzwand 5 das Dichtungselement 4 vor hohen Temperaturen, Strahlung und chemischen Angriffen. Die Schutzwand 5 ist aus temperatur- und strahlungsbeständigem Material gefertigt. Das Dichtungselement 4 ist oder enthält eine gasdichte Schicht. Diese besteht z.B. aus einem elastischen oder plastischen Material oder aus einem Material, dessen Viskosität bei Erwärmung steigt. Die Tragwand 2 braucht wegen der Schutzwand 5 nicht aus strahlungs- und temperaturbeständigem Material zu bestehen. Sie kann daher weniger kostenintensiv gefertigt sein.

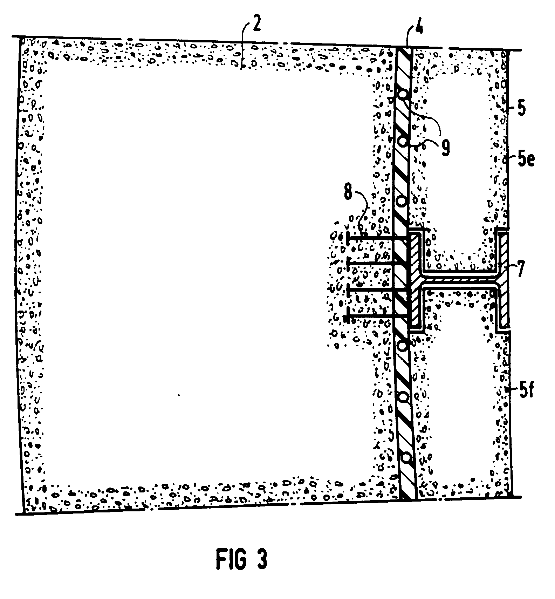

Figur 3 zeigt eine andere Variante zum Anbringen einer mehrteiligen Schutzwand 5. Mit der Tragwand 2 sind dazu doppel-T-förmige Halterungen 7 durch Anker 8 kraftschlüssig verbunden. Ein zuvor auf die Innenoberfläche der Tragwand 2 aufgebrachtes Dichtungselement 4 wird von den Ankern 8 durchdrungen und ist mit den Ankern 8 gasdicht verklebt. Die doppel-T-förmige Halterung 7 nimmt zwei benachbarte Teilstücke 5e und 5f der Schutzwand 5 auf.

Das gezeigte Gebäude kann mit einfachen Mitteln und kostengünstig, selbst zum Nachrüsten, z.B. nach innen gasdicht abgeschlossen werden, wobei das Dichtungselement 4 gegen mechanische Beanspruchungen infolge von Bewegungen des Gebäudes wie auch infolge von auftreffenden Teilen auch aus dem Innenraum des Gebäudes geschützt ist. Es ist darüber hinaus vor Temperatur- und Strahlungeinwirkungen geschützt.

Die Dichtungseigenschaften lassen sich sinngemäß auch auf die Abdichtung gegen Flüssigkeiten übertragen.

Die Abdichtungsmaßnahmen ermöglichen sowohl eine Abdichtung vor innen nach außer als auch entsprechend den statischen Gegebenheiten eine Abdichtung von außen nach innen.

Zur Dichtheitsüberprüfung kann das Dichtungselement 4 Hohlräume 9 aufweisen, die mit einem nicht dargestellten Sensor verbunden sein können, um eine Beschädigung des Dichtungselementes 4 dadurch erkennen zu können, daß in die Hohlräume 9 eine Substanz eingedrungen ist, die vom Sensor erfaßt wird.

## Patentansprüche

1. Wand (1), insbesondere eine Wand (1) eines Containments für eine kerntechnische Anlage, eines Beckens oder einer Kaverne,
**gekennzeichnet,** durch eine Tragwand (2), ein Dichtungselement (4), das mindestens eine Oberfläche der Tragwand (2) überdeckend angeordnet ist,
eine Schutzwand (5), die das Dichtungselement (4) überdeckend angeordnet ist, und
eine kraftschlüssige Verbindung der Schutzwand (5) mit der Tragwand (2).

2. Wand (1) nach Anspruch 1,
**dadurch gekennzeichnet,** daß die Tragwand (2) und/oder die Schutzwand (5) vorgespannt sind/ist und dadurch die Tragwand (2) mit der Schutzwand (5) kraftschlüssig verbunden ist.

3. Wand (1) nach einem der Ansprüche 1 oder 2,
**dadurch gekennzeichnet,** daß die Schutzwand (5) durch Anker (6, 8), die das Dichtungselement (4) durchdringen, mit der Tragwand (2) kraftschlüssig verbunden ist und daß das Dichtungselement (4) mit den Ankern (6, 8) gas- und/oder flüssigkeitsdicht verbunden ist.

4. Wand (1) nach einem der Ansprüche 1 bis 3,
**dadurch gekennzeichnet**, daß das Dichtungselement (4) mit der Tragwand (2) und/oder die Schutzwand (5) mit dem Dichtungselement (4) durch mindestens eine Klebeverbindung kraftschlüssig verbunden sind.

5. Wand (1) nach einem der Ansprüche 1 bis 4,
**dadurch gekennzeichnet,** daß die Schutzwand (5) aus mehreren Teilstücken (5a bis 5f) besteht.

6. Wand (1) nach Anspruch 5,
**dadurch gekennzeichnet,** daß jedes Teilstück (5a bis 5f) durch Anker (6, 8) oder durch eine Klebeverbindung mit der Tragwand (2) kraftschlüssig verbunden ist.

7. Wand (1) nach einem der Ansprüche 5 oder 6,
**dadurch gekennzeichnet**, daß die Teilstücke (5a bis 5f) durch Spannelemente miteinander in Verbindung stehen, wodurch die Teilstücke (5a bis 5f) mit der Tragwand (2) kraftschlüssig verbunden sind.

8. Wand (1) nach einem der Ansprüche 5 bis 7,
**dadurch gekennzeichnet,** daß auf der Schutzwand (5) ein Tragwerk (7, 8) angeordnet ist, durch das die Teilstücke (5a bis 5f) mit der Tragwand (2) kraftschlüssig verbunden sind.

9. Wand (1) nach einem der Ansprüche 5 bis 8,
**dadurch gekennzeichnet**, daß die Teilstücke (5a bis 5d) Fugen zwischen sich freilassend angeordnet sind.

10. Wand (1) nach einem der Ansprüche 1 bis 9,
**dadurch gekennzeichnet**, daß das Dichtungselement (4) eine Schicht ist cder enthält, die aus einem Material besteht, das elastisch und/oder plastisch ist, und/oder dessen Viskosität bei Erwärmung steigt.

11. Wand (1) nach einem der Ansprüche 1 bis 10,
**dadurch gekennzeichnet**, daß das Dichtungselement (4) eine beständige Schicht ist oder enthält, insbesondere aus glasfaser- oder kohlefaseroder metallfaserverstärktem Kunststofflaminat.

12. Wand (1) nach einem der Ansprüche 1 bis 11,
**dadurch gekennzeichnet,** daß die Schutzwand (5) temperaturbeständig und/oder strahlungsbeständig und/oder schlagsicher und/oder schlagdämpfend und/oder korrosionsbeständig ist.

13. Wand (1) nach einem der Ansprüche 5 bis 12,
**dadurch gekennzeichnet**, daß Halterungen (7) durch Anker (8) mit der Tragwand (2) kraftschlüssig verbunden sind und daß durch die Halterungen (7) die Teilstücke (5e, 5f) der Schutzwand (5) gehalten sind.

14. Wand (1) nach Anspruch 13,
**dadurch gekennzeichnet,** daß die Halterungen (7) doppel-T-förmig sind und jeweils zwei benachbarte Teilstücke (5e, 5f) aufnehmen und daß jeweils ein Schenkel der Halterungen (7) durch mindestens einen Anker (8) mit der Tragwand (2) kraftschlüssig verbunden ist.

15. Wand (1) nach einem der Ansprüche 1 bis 14,
**dadurch gekennzeichnet,** daß das Dichtungselement (4) mindestens einen Hohlraum aufweist, der auf eindringende Stoffe überwachbar ist.

## Claims

1. Wall (1), in particular a wall (1) of a containment for a nuclear plant, of a pool or of a cavern, characterised by a supporting wall (2), a sealing element (4) which is arranged so as to cover at least one surface of the supporting wall (2), a protective wall (5) which is arranged so as to cover the sealing element (4), and a frictional connection of the protective wall (5) to the supporting wall (2).

2. Wall (1) according to claim 1, characterised in that the supporting wall (2) and/or the protective wall (5) are/is pretensioned and as a result the supporting wall (2) is frictionally connected to the protective wall (5).

3. Wall (1) according to one of the claims 1 or 2, characterised in that the protective wall (5) is frictionally connected to the supporting wall (2) by means of anchors (6, 8) which penetrate the sealing element (4), and in that the sealing element (4) is connected to the anchors (6, 8) in a gas-tight and/or liquid-tight manner.

4. Wall (1) according to one of the claims 1 to 3, characterised in that the sealing element (4) is frictionally connected to the supporting wall (2) and/or the protective wall (5) is frictionally connected to the sealing element (4) by means of at least one bonding connection.

5. Wall (1) according to one of the claims 1 to 4, characterised in that the protective wall (5) consists of a plurality of parts (5a to 5f).

6. Wall (1) according to claim 5, characterised in that each part (5a to 5f) is frictionally connected to the supporting wall (2) by means of anchors (6, 8) or by means of a bonding connection.

7. Wall (1) according to one of the claims 5 or 6, characterised in that the parts (5a to 5f) communicate with each other by means of clamping elements, whereby the parts (5a to 5f) are frictionally connected to the supporting wall (2).

8. Wall (1) according to one of the claims 5 to 7, characterised in that arranged on the protective wall (5) there is a supporting framework (7, 8) by means of which the parts (5a to 5f) are frictionally connected to the supporting wall (2).

9. Wall (1) according to one of the claims 5 to 8, characterised in that the parts (5a to 5d) are arranged so as to leave joints free between them.

10. Wall (1) according to one of the claims 1 to 9, characterised in that the sealing element (4) is or contains a layer which consists of a material which is elastic and/or plastic and/or the viscosity of which increases in the case of a rise in temperature.

11. Wall (1) according to one of the claims 1 to 10, characterised in that the sealing element (4) is or contains a resistant layer, in particular a layer of a glass fibre-reinforced or carbon fibre-reinforced or metal fibre-reinforced plastics laminate.

12. Wall (1) according to one of the claims 1 to 11, characterised in that the protective wall (5) is heat-resistant and/or radiation-resistant and/or impact-resistant and/or impact-attenuating and/or corrosion-resistant.

13. Wall (1) according to one of the claims 5 to 12, characterised in that holding supports (7) are frictionally connected to the supporting wall (2) by means of anchors (8) and in that the parts (5e, 5f) of the protective wall (5) are held by means of the holding supports (7).

14. Wall (1) according to claim 13, characterised in that the holding supports (7) are double T-shaped and respectively accommodate two adjacent parts (5e, 5f) and in that a respective leg of the holding supports (7) is frictionally connected to the supporting wall (2) by means of at least one anchor (8).

15. Wall (1) according to one of the claims 1 to 14, characterised in that the sealing element (4) has at least one cavity which can be monitored for penetrating substances.

## Revendications

1. Paroi (1), notamment paroi (1) d'un confinement pour une installation nucléaire, d'un bassin ou d'une caverne, caractérisée par une paroi porteuse (2), un élément d'étanchéité (4) qui est situé de manière à couvrir au moins une surface de la paroi porteuse (2), une paroi de protection (5) qui est située de manière à couvrir l'élément d'étanchéité (4) et une liaison par friction de la paroi de protection (5) et de la paroi porteuse (2).

2. Paroi (1) selon la revendication 1, caractérisée en ce que la paroi porteuse (2) et/ou la paroi de protection (5) est/sont mise/s en précontrainte et en ce que, par ce moyen, la paroi porteuse (2) est reliée par friction à la paroi de protection (5).

3. Paroi (1) selon l'une des revendications 1 ou 2, caractérisée en ce que la paroi de protection (5) est liée par friction à la paroi porteuse (2) au moyen d'éléments d'ancrage (6, 8) qui traversent l'élément d'étanchéité (4), et en ce que l'élément d'étanchéité (4) est relié aux éléments d'ancrage (6, 8) de manière étanche aux gaz et/ou aux liquides.

4. Paroi (1) selon l'une des revendications 1 à 3, caractérisée en ce que l'élément d'étanchéité (4) est relié à la paroi porteuse (2) et/ou la paroi de protection (5) est reliée à l'élément d'étanchéité (4), par friction grâce à au moins une liaison adhésive.

5. Paroi (1) selon l'une des revendications 1 à 4, caractérisée en ce que la paroi de protection (5) est formée par plusieurs morceaux (5a à 5f).

6. Paroi (1) selon la revendication 5, caractérisée en ce que chaque morceau (5a à 5f) est relié à la paroi porteuse (2) par friction au moyen d'éléments d'ancrage (6, 8) ou grâce à une liaison adhésive.

7. Paroi (1) selon l'une des revendications 5 ou 6, caractérisée en ce que les morceaux (5a à 5f) sont reliés les uns aux autres par des éléments de serrage, grâce auxquels les morceaux (5a à 5f) sont reliés par friction à la paroi porteuse (2).

8. Paroi (1) selon l'une des revendications 5 à 7, caractérisée en ce qu'une structure porteuse (7, 8) est située sur la paroi de protection (5), grâce à laquelle les morceaux (5a à 5f) sont reliés par friction à la paroi porteuse (2).

9. Paroi (1) selon l'une des revendications 5 à 8, caractérisée en ce que les morceaux (5a à 5d) sont disposés en laissant des joints entre eux.

10. Paroi (1) selon l'une des revendications 1 à 9, caractérisée en ce que l'élément d'étanchéité (4) est formé par ou contient une couche faite d'un matériau qui est élastique et/ou plastique et/ou dont la viscosité augmente lorsqu'il est chauffé.

11. Paroi (1) selon l'une des revendications 1 à 10, caractérisée en ce que l'élément d'étanchéité (4) est formé par ou contient une couche résistante, notamment un aggloméré stratifié en matière plastique renforcé par des fibres de verre, des fibres de carbone ou des fibres métalliques.

12. Paroi (1) selon l'une des revendications 1 à 11, caractérisée en ce que la paroi de protection (5) est résistante à la chaleur et/ou résistante aux rayonnements et/ou résistante aux chocs et/ou résistante à la corrosion et/ou elle amortit les chocs.

13. Paroi (1) selon l'une des revendications 5 à 12, caractérisée en ce que des fixations (7) sont reliées par friction à la paroi porteuse (2) au moyen d'éléments d'ancrage (8) et en ce que les morceaux (5e, 5f) de la paroi de protection (5) sont maintenus par les fixations (7).

14. Paroi (1) selon la revendication 13, caractérisée en ce que les fixations (7) ont la forme d'un double-T et reçoivent chacune deux morceaux (5e, 5f) contigus, et en ce qu'à chaque fois une branche des fixations (7) est reliée par friction à la paroi porteuse (2) au moyen d'au moins un élément d'ancrage (8).

15. Paroi (1) selon l'une des revendications 1 à 14, caractérisée en ce que l'élément d'étanchéité (4) est pourvu d'au moins une cavité où l'on peut contrôler la pénétration de substances.
